Europäisches Patentamt

(19) European Patent Office

Office européen des brevets

(11) Publication number: **0 204 941**
**A2**

## (12) EUROPEAN PATENT APPLICATION

(21) Application number: 86105937.6

(22) Date of filing: 30.04.86

(51) Int. Cl.⁴: **A 23 G 1/00**
**A 23 G 1/04, A 23 L 1/38**

(30) Priority: 10.06.85 US 743201

(43) Date of publication of application:
17.12.86 Bulletin 86/51

(84) Designated Contracting States:
BE CH DE FR GB IT LI LU NL SE

(71) Applicant: National Starch and Chemical Corporation
10 Finderne Avenue Box 6500
Bridgewater New Jersey 08807(US)

(72) Inventor: Nappen, Bernard H.
19 Penn Road
Cranford New Jersey 07016(US)

(72) Inventor: Koval, Patricia L.
Route No. 519
Baptistown New Jersey 08803(US)

(74) Representative: Hagemann, Heinrich, Dr. et al,
Patentanwälte GEYER, HAGEMANN & KEHL Postfach 860329
D-8000 München 86(DE)

(54) Dry blends suitable for the preparation of formed nut or chocolate morsels for food products.

(57) A chocolate and/or nut dry blend suitable for the preparation of formed pieces consists essentially of 1-30% chocolate liquor and/or nut butter, 30-85% sugar; 3-12% water, 0-15% pregelatinized starch; 0-30% bulking agent, and/or 0-1% gum, the percentages being by weight and totalling 100%. The blend is formed under conditions of low shear and low temperature, preferably in a forming extruder. The dry, shelf-stable pieces are useful in various food products including dry, cooked, or non-cooked preparations.

EP 0 204 941 A2

Croydon Printing Company Ltd.

## BLENDS SUITABLE FOR THE PREPARATION OF
## FORMED NUT OR CHOCOLATE MORSELS FOR FOOD PRODUCTS

The present invention is directed to a mixture suitable for preparing formed nut or chocolate morsels for use in prepared food products or for co-forming, as by coextruding, food products.

The prior art consists of natural or artificial nut blends, such as peanut butter, or chocolate morsels. The chocolate morsels can be packaged in dry mixes or added separately. Such morsels are naturally high in fat and, with the current interest in lower fat foods, a low fat substitute is desirable. In addition, it would be difficult to coextrude such a product to form products with dual texture and taste. The presence of so much fat would lead to problems such as bleeding, fat migration, and sensitivity to rancidity.

There is therefore a need for dry, shelf-stable chocolate or nut pieces which are based on chocolate liquors or nut butters, which can be incorporated into dry, cooked, or non-cooked preparations and which rehydrate to acceptably textured pieces.

A dry blend suitable for the preparation of formed chocolate and/or nut pieces consists essentially of 1-30% of chocolate liquor and/or nut butter; 30-85% sugar; 3-12% water; 0-15% of a pregelatinized starch; 0-30% of a bulking agent; and/or 0-1% of a gum; the percentages being by weight and totalling 100%, the pieces being formed under conditions of low shear and at a low temperature. Typically, the mixture contains an edible salt, acid, humectant, and/or natural or artificial flavor. Preferably, the blend contains 15-20% chocolate liquor and/or nut butter solids; 50-80% sugar; 2-10% water; 2-10% starch and 0.01-0.05% gum. As used herein, the term chocolate liquor includes the use of cocoa and cocoa butter which in combination are equivalent to the liquor. Typically the mixture contains an edible salt, acid, humectant, and/or natural or artificial flavor. The presence of the water is necessary for formation; however, too much water can lead to the water-soluble materials solubilizing and losing shape. This is probably due to the sugar present dissolving and losing its crystalline form.

Preferably, the chocolate and/or nut blend is processed (i.e., worked, transported, and extruded), without the use of external heat, under low shear conditions, and at a low r.p.m., so as to compact and form the extrudate. If necessary, the temperature can be controlled by circulating water or cooling fluids through the hollow-shaft and hollow-flight forming extruder screws. This may be done in conjunction with, or in place of, the use of jacketed extruder barrels circulating water or a cooling fluid. The extrudate is warm to the touch, probably at a temperature below 60°C (140°F).

Generally, piece sizes and shapes may be changed by changing the die assembly or, in some cases, by merely changing the die inserts. A variable speed sizing knife at the die permits the control of the extrudate length. Typically, the extrudate benefits from a brief air cooling between the die and the sizing knife - usually for pieces that are to be used as ribbons. If the pieces are to be cut into morsels, the cutting can be carried out as the extrudate leaves the die. Suitable forming mechanisms include forming extruders, a Kitchen Aid meat grinder, a rubber mill, a tablet press, and the like. Particularly suitable are the forming extruders available from Wenger Manufacturing, Sabetha, Kansas which are available both as single screw and double screw with a split/hinged or sectional barrel. These forming extruders operate at 10-100 r.p.m. in contrast with cooker extruders which operate at 300-500 r.p.m. The extruded cut pieces are conveyed by an air vacuum or on a belt to the cooling area.

The resulting low moisture chocolate and nut pieces have the appearance, texture, and taste of the genuine flavors from which they are prepared. Flow agents such as specialty starches (e.g., DRY-FLO® available from National Starch and Chemical Corp.), granular sugar, or various silicon dioxides may be applied after the extrusion and cutting steps to prevent agglomeration during storage. Other advantages of these pieces include their all natural flavor and color, good shelf life, low water activity (typically less than 0.7), and ease of handling. In addition, they retain their structural integrity after baking and show minimal flavor loss after baking or freezing, as well as after reheating of finished baked products containing the morsels. The chocolate and/or nut blend can also be coextruded to produce foods with dual texture and taste, e.g., chocolate and/or nut filled snacks. In addition to being useful in bakery products such as cookies, breads, rolls, and cakes, they can be used in cooked dessert products such as puddings and custards and non-cooked products such as ice cream, sherberts and cereal products.

As discussed above, chocolate liquor or cocoa in combination with cocoa butter are suitable, as well as nut butters such as peanut butter, hazel nut, almond, and pistachio.

Suitable sugars include conventional mono- and disaccharides including, for example, sucrose, dextrose, lactose, fructose, corn syrup solids, and mixtures thereof. Preferably, a fine grind such as a Confectioner's sugar is used to improve mouthfeel. Also suitable are synthetic sugars such as polydextrose (available from Pfizer Chemical Co.) which are low in sweetness. Such sugars may be desirable for use with artificial sweeteners for the preparation of low calorie pieces.

The gums suitable for use herein include any of those typically used in food systems, such as alginates, guar gum, locust bean gum, xanthan gum, carageenan, pectin, methyl cellulose, hydroxypropyl cellulose, and mixtures thereof. The gums are dissolved in water prior to their addition to the mix. Heat was used, where necessary, to aid in solubilization of the gums, e.g. with a blend of locust bean and xanthan gum. The gum aids in the extrusion by acting as a slip agent; however, it is not required. It is preferred because of its water-holding properties and film-forming which are desirable in the extruded piece.

The food starches preferably present in the blend are typical pregelatinized starches, optionally modified as by stabilization and/or crosslinking, which are selected according to the end use for the pieces. The use of crosslinked starches aids in controlling the flow viscosity of the pieces when they are subjected to bakery temperatures. The starch helps to reduce boil-out or flow of the pieces under these conditions; however, for some end uses (e.g. ice cream) it is not required. Stabilized starches known for their freeze-thaw stability are used in frozen or refrigerated products. Various starch sources can be used including, for example, corn, tapioca, waxy maize, potato, wheat, and the like.

The bulking agents suitable for use herein include wheat flour, whey, yeast, and the like.

In the examples which follow, all parts are by weight and all temperatures are in degrees Celsius unless otherwise noted.

### Example I

This example describes the preparation of peanut butter morsels using natural and artificial flavors. A dry blend was formed by thoroughly blending 31.31 parts of finely ground sugar (Baker's special), 21.40 parts of dextrose, 19.00 parts of creamy peanut butter, 19.00 parts of yeast powder, 2.80 parts of a modified pregelatinized tapioca food starch, 1.00 part of salt, and 0.50 part of artificial roasted peanut butter flavor. Another blend was prepared by mixing together 0.01 part xanthan gum (Keltrol F from Kelco), 0.01 part locust bean gum, and 0.02 part of the above indicated sugar and thoroughly dispersing them in 4.96 parts water. This liquid blend was heated to 150°F (65°C) and then added to the dry blend and mixing was continued until all the components were thoroughly blended.

The peanut butter blend was fed into the feed tube of a Kitchen Aid meat grinder equipped with a die plate having 0.64 cm. (0.25 in.) orifices. The individual extruded strands were separated, allowed to cool to room temperature, and then cut into individual morsels.

### Example II

This example describes the preparation of chocolate morsels using natural flavors. A dry blend was formed as above from 14.30 parts of chocolate liquor (melted by heating to 48-55°C - 120-130°F), 50.82 parts of sugar, 21.40 parts of dextrose, 4.80 parts Dutched cocoa, 2.80 parts of a modified pregelatinized tapioca food starch, and 0.90 part of salt.

A gum solution was prepared and added as in Example I. The chocolate blend was extruded as in Example I.

### Example III

This example shows the use of the morsels to prepare cookies.

A total of about 15% of a combination of the chocolate and peanut butter morsels were used in a cookie batter prepared from a dry sugar cookie mix (Duncan Hines). The cookies, prepared as drop cookies or bars, had an excellent synergistic flavor and the pieces remained intact.

Summarizing, this invention provides a chocolate or nut blend suitable for preparing low moisture pieces and a process for their extrusion under low shear and low temperature conditions, as well as food products containing such pieces.

WHAT IS CLAIMED IS:

1. A dry chocolate and/or nut blend suitable for the preparation of a formed chocolate and/or nut piece, which consists essentially of 1-30% of a chocolate liquor or a nut butter, or mixture thereof; 30-85% of a sugar, 3-12% water; 0-15% of a pregelatinized starch; 0-30% of a bulking agent; and/or 0-1% of a gum; the percentages being by weight and totalling 100%; the piece to be formed under conditions of low shear and low temperature.

2. The blend of Claim 1, wherein the piece is formed by extrusion under conditions of low shear and low temperature.

3. The blend of Claim 2, wherein the chocolate liquor is a combination of cocoa and cocoa butter and wherein the nut butter is selected from the group consisting peanut butter; hazel nut, almond, and pistachio.

4. The blend of Claim 1, further comprising an edible salt, an acid, a humectant, and/or a natural or an artificial flavor and wherein the chocolate liquor or nut butter is present in an amount of about 15-20%; the sugar is present in an amount of about 50-80%; the water is present in an amount of about 2-10%; the starch is present in an amount of about 2-10%; and the gum is present in an amount of about 0.01-0.05%.

5. The blend of Claim 4, wherein sugar is a finely ground sugar selected from the group consisting of sucrose, dextrose, lactose, fructose, and polydextrose.

6. The blend of Claim 4, wherein the gum is selected from the group

2    0204941

consisting of guar gum, xanthan gum, and locust bean gum.

7. A dry, shelf-stable chocolate and/or nut piece, which is prepared by the steps of:

(a) forming a chocolate blend, a nut blend, or mixtures thereof under conditions of low shear and at a low temperature, the chocolate and/or nut blend consisting essentially of 1-30% of a chocolate liquor or a nut butter, or mixtures thereof; 30-85% of a sugar; 3-12% of water; 0-15% of a pregelatinized starch; 0-30% of a bulking agent; and/or 0-1% of a gum; the percentages being by weight and totalling 100%; and

(b) cooling the formed chocolate and/or nut piece at ambient temperature.

8. The piece of Claim 7, wherein the forming is carried out by extruding the blend and wherein the extruded piece is a ribbon or a morsel prepared by the added step of cutting the ribbon after the extrusion step and prior to the cooling step.

9. A food product containing the dry chocolate or nut piece of Claim 8, the food product being selected from the group consisting of a dry, cooked, or non-cooked food preparation.

10. A food product prepared by coextruding the blend of Claim 4 and a bakery dough effective for extrusion under the low shear and low temperature forming conditions and present in an amount sufficient to form a dough extrudate filled with the chocolate or nut blend.